**Europäisches Patentamt**

**European Patent Office**

**Office européen des brevets**

(19)

(11) Veröffentlichungsnummer: **0 195 852**
**A2**

(12) # EUROPÄISCHE PATENTANMELDUNG

(21) Anmeldenummer: **85115339.5**

(22) Anmeldetag: **03.12.85**

(51) Int. Cl.⁴: **E 04 G 5/00**

(30) Priorität: **05.12.84 CH 5780/84**

(43) Veröffentlichungstag der Anmeldung: **01.10.86**
**Patentblatt 86/40**

(84) Benannte Vertragsstaaten: **AT BE CH DE FR GB IT LI LU NL SE**

(71) Anmelder: **RUBINARA AG, Hans-Saxer-Strasse 9, CH-9451 Eichberg/SG (CH)**

(72) Erfinder: **Schnell, Raimund, Dipl.-Ing., Hans-Saxer-Strasse 9, CH-9451 Eichberg SG (CH)**

(74) Vertreter: **Riebling, Günter, Dr. et al, Patentanwälte Dr.-Ing., Dipl.-Ing., Ing.(grad) Günter Riebling Dr.-Ing., Dipl.-Ing. Peter Riebling Rennerle 10 Postfach 3160, D-8990 Lindau (Bodensee) (DE)**

(54) **Verbindungsanordnung für wenigstens ein längliches Profil mit einem unter verschiedenen Winkeln anzuordnenden Körper.**

(57) Eine Verbindungsanordnung (2) für wenigstens ein längliches Profil (1 bzw. 1') mit einem weiteren Körper (1' bzw. 1) unter an sich beliebigem Winkel weist wenigstens einen Schellenteil (3 bzw. 3') mit einer Ausnehmung (11) für das Profil (1 bzw. 1') auf. Um den weiteren Körper und insbesondere einen weiteren Schellenteil (3' bzw. 3) mit einem weiteren Profil (1' bzw. 1) verbinden zu können, ist eine zugankerartige Verbindung (6, 7) vorgesehen, die nicht nur eine Klemmkraft ergibt, sondern auch die Drehachse (12) für die Winkelverstellung definiert. Durch diese zugankerartige Verbindung (6, 7) kann an die wenigstens normal zur Zugankerachse (12) offene Ausnehmung (11) eine Stützfläche (4) zum Abstützen des zu haltenden Profiles (1 bzw. 1') innerhalb der Ausnehmung (11) angeklemmt werden.

Verbindungsanordnung für wenigstens ein
längliches Profil mit einem unter verschiedenen
Winkeln anzuordnenden Körper
-------------------------------------------------------

Die Erfindung bezieht sich auf eine Verbindungsanordnung für wenigstens ein längliches Profil mit einem damit zu verbindenden weiteren, relativ zum Profil unter verschiedenen Winkeln anzuordnenden Körper, mit zumindest einem das Profil aufnehmenden Schellenteil, der hierfür eine Ausnehmung aufweist, sowie mit einer Verbindung zum Befestigen des weiteren Körpers.

Besonders für den Bau von Gerüsten, Regalen und anderen Rohrkonstruktionen, bei denen stangenartige Rohrprofile verwendet werden, sind bereits zahlreiche Verbindungsanordnungen vorgeschlagen worden. Selbstverständlich können die meisten dieser Anordnungen mit nur geringen handwerklichen Änderungen auch für andere Profilkörper verwendet werden, etwa Rechteck- oder Polygonprofile usw.. Dabei sind herkömmliche winkelvariable Verbindungsanordnungen relativ kompliziert aufgebaut und bestehen aus mehreren Teilen, die meist auch bei der Montage mit mehreren Schrauben festgezogen werden müssen.

Der Erfindung liegt die Aufgabe zugrunde, eine derartige winkelvariable Verbindungsanordnung zu vereinfachen, und dies gelingt erfindungsgemäß dadurch, daß die Verbindung den Schellenteil zugankerartig durchsetzt und die das Profil aufnehmende Ausnehmung zumindest an einer normal zur Achse der zugankerartigen Verbindung liegenden Seite offen ist, wobei gegen die offene Seite der Ausnehmung mit Hilfe der zugankerartigen Verbindung eine Stützfläche spannbar ist.

0195852

Demnach werden bei dieser Ausbildung durch die zugankerartige Verbindung zwei Funktionen erfüllt. Einerseits gibt diese Verbindung die nötige Spannkraft zum Festspannen des Profiles über die Stützfläche, anderseits bildet diese zugankerartige Verbindung eine Achse, um die die Veränderung des Winkels der beiden miteinander zu verbindenden Teile bewerkstelligt werden kann.

Dabei kann der mit dem Profil zu verbindende Körper an sich beliebiger Natur sein, beispielsweise auch von einer Konsole zur Unterstützung eines Regalbrettes gebildet sein, wie später noch gezeigt wird. Bevorzugt ist jedoch der weitere Körper von wenigstens einem mit einer ebenso wenigstens einseitig offenen Ausnehmung versehen und eine Aufnahme für die zugankerartige Verbindung aufweisenden zweiten Schellenteil gebildet, der vorzugsweise die gleichen Dimensionen wie der erste Schellenteil aufweist, so daß auf diese Weise zwei Profile einander unter beliebigem Winkel kreuzen bzw. aneinander vorbeilaufen können, aber auch parallel zueinander verlaufend befestigbar sind (d.h. sie kreuzen einander unter dem Winkel von O Grad). Gerade diese Ausbildung ist von höchstem Interesse für die erwähnten Gerüste, Regale, aber auch Messestände und andere Metallkonstruktionen, Fachwerkbauten etc..

Im einfachsten Falle ist die Stützfläche am jeweils anderen Schellenteil selbst ausgebildet, und verläuft senkrecht zur Achse, sowie vorzugsweise in derselben Ebene wie die offene Seite der Ausnehmung. Dadurch kann ein gesonderter Teil für die Stützfläche eingespart werden. Vorzugsweise entspricht dabei die Dimension der Ausnehmung wenigstens des einen Schellenteiles etwa parallel zur Achse der zugankerartigen Verbindung wenigstens annähernd der in gleicher Richtung gemessenen Dimension des zu befestigenden Profiles, wodurch sich

0195852

eine stabiliere und festere Verbindung ergibt.

Es kann aber auch die Stützfläche einen zwischen beiden Schellenteilen angeordneten, insbesondere scheibenförmigen, Zwischenteil aufweisen, der beispielsweise aus flexiblem Material besteht. In letzterem Fall wird die Stützfläche noch zusätzlich einer dahinter angeordneten steifen Wandung bedürfen, die - wie bereits erwähnt - weise am jeweils anderen Schellenteil, und zwar im allgemeinen an seiner Stirnfläche, ausgebildet sein kann. Der flexible Zwischenteil dient dann dazu, das zu befestigende Profil an seiner Außenseite zu schonen und Kratzer od. dgl. zu vermeiden. Es kann die Ausbildung aber auch so getroffen sein, daß die Stützfläche an einem insbesondere rohrförmigen Zwischenteil ausgebildet ist, der als Distanzstück zwischen die Schellenteile einsetzbar ist und vorzugsweise aus etwa ebenso hartem Material wie die Schellenteile besteht.

Für die Kombination zweier Profile unterschiedlichen Durchmessers wird ein Zwischenteil verwendet, der einen Abschnitt größerer Dicke aufweist, der mit einer Ausnehmung zusammenwirkt, die ein Profil kleineren Querschnittes aufnimmt.

Für die Montage ist es günstig, wenn wenigstens ein Schellenteil eine nicht nur gegenüber dem anderen Schellenteil, sondern auch an seiner dazu etwa im rechten Winkel liegenden Seite mit einer Ausnehmung versehen ist, wobei der Schellenteil - gesehen in Richtung des einzulegenden Profiles - etwa L-förmig ist, daß vorzugsweise die zugankerartige Verbindung nahe der die Ausnehmung begrenzenden Oberfläche des gegen den anderen Schellenteil gerichteten L-Schenkels verläuft, und daß insbesondere der andere Schellenteil ebenso ausgebildet ist.

Es ist dann die Ausnehmung auch nach der parallel zur Achse liegenden Seite offen, wodurch sich ein etwa L-förmiger Schellenteil ergibt, dessen senkrecht zur Achse verlaufender Schenkel an seinem Ende vorzugsweise stärker bemessen ist als in seiner Mitte. Dabei ergibt sich durch den Verlauf der zugankerartigen Verbindung nahe der Oberfläche des gegen den anderen Schellenteil gerichteten L-Schenkels eine Exzentrizität der Stirnfläche dieses L-Schenkels, welche Fläche dann bei einer Verdrehung selbst als Stützfläche wirken kann. Durch die gleichartige Ausbildung der beiden Schellenteile können größere Serien hergestellt werden, was die Herstellungskosten verringert, wobei gleichzeitig die Lagerhaltung vereinfacht wird. Es sei jedoch darauf hingewiesen, daß es im Rahmen der Erfindung durchaus auch möglich ist, zur Verbindung von Profilen unterschiedlicher Querschnittsdimension auch unterschiedlich ausgebildete Schellenteile zusammenzuspannen.

Obwohl es denkbar wäre, daß die Stützfläche sich in ihrer Form an die Außenfläche des jeweils zu befestigenden Profiles anpaßt, beispielsweise für Rohre eine entsprechende Auskehlung besitzt, ist es bevorzugt, wenn die Stützfläche im wesentlichen eben ausgebildet ist, weil so eine universellere Einsatzmöglichkeit gesichert ist.

Für Gerüste od. dgl., wo es nicht darauf ankommt, wenn die Profiloberfläche gegebenenfalls angekratzt wird, kann es vorteilhaft sein, wenn die Stützfläche und/oder die Innenfläche der Ausnehmung wenigstens teilweise rauh, beispielsweise geriffelt, gezahnt oder körnig und/oder elastisch nachgiebig ausgebildet ist.

Diese Rauhigkeit kann gegebenenfalls relativ tiefgehend sein, und es mag dann für manche Anwendungen zweckmäßig erscheinen, daß - bei einer gezahnten Stützfläche mit wenigstens einem radial bezüglich der zugankerartigen Verbindung verlaufenden Zahn - die ihr gegenüberliegende Stirnfläche des weiteren Körpers, der mit der Stützfläche durch die zugankerartige Verbindung verbunden ist, mit den wenigstens einen Zahn der Stützfläche wahlweise aufnehmenden radial verlaufenden Vertiefungen versehen ist. Umgekehrt besitzt die Stirnfläche wenigstens einen in Vertiefungen der Stützfläche eingreifenden Zahn. Dadurch kann dann der Winkel der Verbindung praktisch nur mehr in Stufen - entsprechend dem Winkelabstand der Vertiefungen - eingestellt werden, doch besitzt die Verbindung dann in jeder eingestellten Winkellage eine größere Stabilität gegen Verdrehung.

Für bestimmte Fälle kann sowohl die Stützfläche wie auch die ihr gegenüberliegende Stirnfläche Zähne aufweisen, wobei die Zahnkronen beider Flächen zur Ausbildung einer vergrößerten Distanz zwischen den Innenflächen der beiden Ausnehmungen - vorzugsweise mit Hilfe eines Rastsitzes - aufeinanderliegen.

Weitere Einzelheiten ergeben sich aus der nachfolgenden Beschreibung von in der Zeichnung schematisch dargestellten Ausführungsbeispielen. Es zeigen:

Fig. 1 eine axonometrische Ansicht eines ersten Ausführungsbeispieles, das in

Fig. 2 in einer Seitenansicht, mit Schnitt durch eines der Rohrprofile dargestellt ist;

Fig. 3 in verschiedenen Darstellungen a bis d die mit einer solchen Verbindungsanordnung möglichen Winkelstellungen zweier miteinander verbundener Rohrprofile;

Fig. 4 eine zweite Ausführungsform in Seitenansicht, teilweise im Schnitt, mit einem Zwischenstück;

Fig. 5 ein drittes Ausführungsbeispiel mit unterschiedlichen Querschnittsdimensionen der Rohrprofile;

Fig. 6 eine der Fig. 5 ähnliche Ansicht einer vierten Ausführungsvariante;

Fig. 7 eine explodierte Darstellung einer fünften Ausführungsform;

Fig. 8 eine axonometrische Ansicht einer sechsten Variante;

Fig. 9 eine der Fig. 7 ähnliche Darstellung einer Ausführung für verschiedene Rohrdurchmesser;

Fig. 10 eine achte Variante zur Verbindung eines Rohrprofiles mit einem Regalbrett;

Fig. 11 ein neuntes Ausführungsbeispiel in einer der Fig. 4 ähnlichen Darstellung; und

Fig. 12 eine zehnte Ausführungsform zur Verbindung dreier einander kreuzender Rohrprofile.

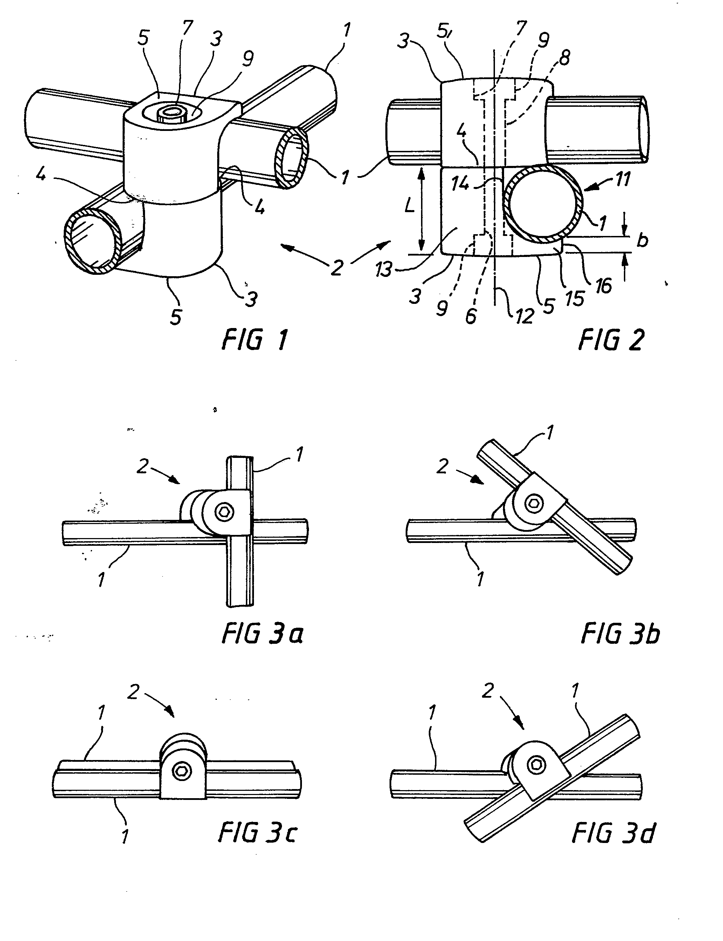

Gemäß den Fig. 1 bis 3 werden zwei Rohrprofile durch eine Verbindungsanordnung 2 miteinander verbunden, die es gestattet, daß sich beide Rohrprofile unter beliebig einstellbaren Winkeln kreuzen. Beispielsweise ist aus Fig. 2 ersichtlich, daß die beiden Rohrprofile nicht ganz im rechten Winkel zueinander stehen (vgl. die sichtbare Rohreinmündung an der rechten Seite).

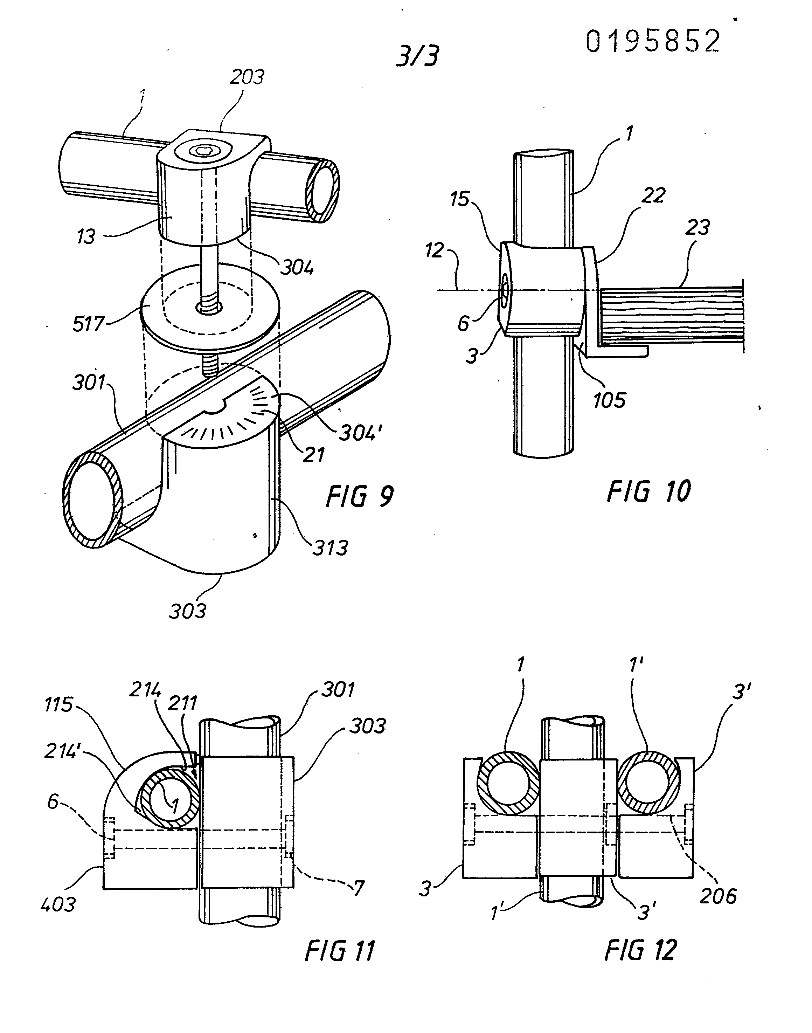

Die Verbindungsanordnung 2 besteht im wesentlichen aus zwei die Rohrprofile jeweils aufnehmenden, nach Art von Rohrschellen ausgebildeten  Teilen 3, die bevorzugt völlig gleich ausgebildet sind, obwohl für bestimmte Fälle auch eine ungleiche Ausbildung zweckmäßig ist,  wie später an Hand der Fig. 9 noch beschrieben wird.

Jeder Schellenteil 3 besitzt eine dem anderen Schellenteil zugekehrte Stirnfläche 4 und eine - z.B. parallel zur Stirnfläche 4 verlaufende - Rückenfläche 5, die dementsprechend nach außen gekehrt ist. Die Rückenfläche 5, ebenso wie die Stirnfläche 4, ist vorzugsweise eben ausgebildet, obwohl besonders die Rückenfläche 5', wie in Fig. 2 angedeutet, an sich beliebige Form haben könnte.

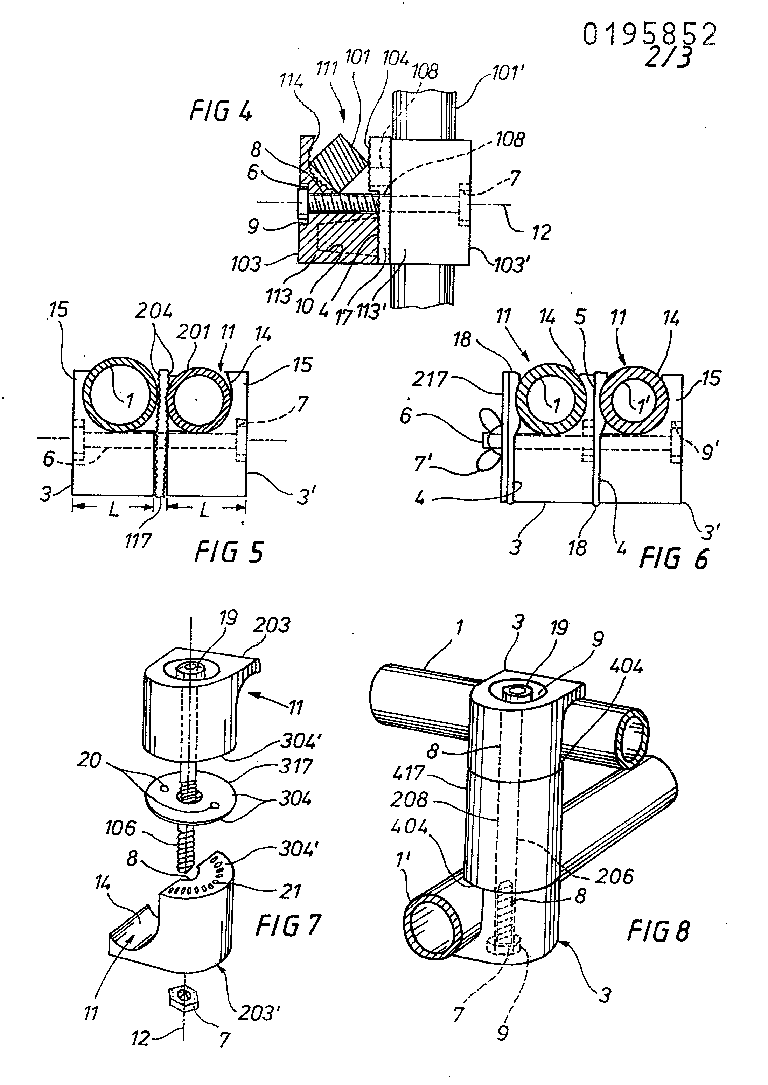

Beide Schellenteile sind miteinander durch einen Schraubbolzen 6 (in Fig. 2 lediglich strichliert angedeutet, vgl. auch die Fig. 4) und eine an seinem Ende aufgeschraubte Mutter 7 verbunden. Der Schraubbolzen durchsetzt dabei eine relativ weite Bohrung 8 in den beiden Schellenteilen. Diese Bohrung 8 ist vorzugsweise um ein Fünftel bis ein Drittel, insbesondere etwa ein Viertel, größer als der Durchmesser des Bolzens 6, um ihm so eine gewisse Beweglichkeit zu sichern, zumal es bei manchen Ausführungen (vgl. die Fig. 5, 11 und 12) vorkommen kann, daß die beiden Schellenteile beim Zusammenschrauben eine leichte Schrägstellung erhalten.

Obwohl es theoretisch auch möglich wäre, an Stelle der Mutter 7 die Bohrung 8 der Schellenteile 3 mit einem dem Bolzen 6 entsprechenden Innengewinde zu versehen, sind die Schellenteile 3 zweckmäßig in ihren Bohrungen 8 von jedem Gewinde frei, so daß sich die Verbindung beider Teile nur durch die beim Aufschrauben der Mutter 7 ausgeübten Zugkräfte ergibt. Der Schraubbolzen 6 hat somit die Funktion eines Zugankers.

Die Mutter 7 sitzt vorteilhaft in einer Ausnehmung 9 der Rückenfläche 5. Diese Ausnehmung 9 ist vorzugsweise so beschaffen, daß die Mutter 7 darin formschlüssig gehalten wird, d.h. im Falle einer Sechskantmutter 7 weist die Ausnehmung eine die Mutter 7 aufnehmende sechskantförmige Vertiefung (nicht dargestellt) auf, so daß es genügt, den Schraubbolzen 6 von einer Seite her zu drehen, ohne dabei die Mutter 7 festhalten zu müssen. Selbstverständlich kann die Anordnung auch umgekehrt sein, indem der Kopf des Schraubbolzens 6 durch eine entsprechende Ausnehmung 9 festgehalten wird und die Mutter 7, z.B. mittels eines Steckschlüssels, schraubbar ist.

Eine derartige formschlüssige Verbindung innerhalb der Ausnehmung 9 ist durch spanabhebende Bearbeitung schwer herzustellen. Nicht zuletzt deshalb ist es daher bevorzugt, wenn die Schellenteile 3 aus gießbarem Material bestehen. Da derartige Verbindungsanordnungen 2 häufig für Gerüste und Baukonstruktionen verwendet werden, wo größere Kräfte zu berücksichtigen sind, ist die Verwendung eines Metalles besonders zweckmäßig, und so empfiehlt sich besonders die Herstellung der Schellenteile 3 aus Druckgußmaterial, wie Aluminium oder Magnesium. Auf diese Weise tritt auch noch der besondere Vorteil des geringen Gewichtes hinzu, der noch dadurch vergrößert werden kann, daß die Schellenteile 3 nicht voll ausgeführt sind, sondern Aushöhlungen 10 besitzen, wie dies in Fig. 4 strichpunktiert angedeutet ist. Wie dort ersichtlich ist, besitzen diese Aushöhlungen 10 vorzugsweise keilförmige Wandungen, um das Entformen zu erleichtern. Die Verwendung von Aluminium oder Magnesium ist auch aus Festigkeitsgründen günstig.

Wie besonders aus Fig. 2 deutlich zu ersehen ist, ist jeder Schellenteil 3 in Seitenansicht etwa L-förmig ausgebildet, indem aus einem blockförmigen Teil eine Ausnehmung 11 zur Aufnahme des jeweiligen länglichen Profiles 1 ausgeschnitten ist. Diese Ausnehmung 11 ist aus den nachfolgend beschriebenen Gründen wenigstens gegen den jeweils anderen Schellenteil 3 zu offen, und zwar an einer senkrecht zur Achse 12 der zugankerartigen Verbindung 6,7 verlaufenden Seite, nämlich an der Stirnfläche 4. Bei der Ausführung nach den Fig. 1 bis 3 entspricht dabei die Länge L des einen L-Schenkels 13 ziemlich genau dem Durchmesser des von der Ausnehmung 11 aufzunehmenden Rohrprofiles 1 zuzüglich der Stärke des anderen L-Schenkels 15. Diese Bedingung entspricht wohl einer vorteilhaften Ausführung, doch wird an Hand später zu beschreibender Figuren gezeigt werden, daß dies nicht unbedingt erforderlich ist.

Wie ebenfalls aus Fig. 2 ersichtlich ist, liegt die Achse der zugankerartigen Verbindung 6,7 derart, daß die Ausnehmung 11 durch eine nahe der Mantelfläche des Schraubbolzens 6 verlaufende Fläche 14 begrenzt wird. In der Praxis mag die Ausbildung sogar so sein, daß die Bohrung 8 die Fläche 14 teilweise schlitzförmig durchbricht. Dies stört im allgemeinen einerseits deshalb nicht, weil der Schraubbolzen 6 ja nur an seinem Ende durch die Mutter 7 verschraubt wird, so daß eine allfällige, durch das Rohrprofil 1 beim Festklemmen entstehende Gewindebeschädigung keine Rolle spielt, anderseits kann der Schraubbolzen 6 ohne weiteres auch als Torbandschraube mit glatter Oberfläche im Bereiche des zu klemmenden Rohrprofiles 1 ausgebildet sein, wenn es etwa darauf ankäme, eine allfällige Beschädigung von dessen Oberfläche durch das Bolzengewinde zu vermeiden. Überdies ist es aber auch denkbar, für diesen Zweck die Innenfläche 14 der Ausnehmung 11 durch einen weichen Belag aus Filz, Gummi od. dgl. auszukleiden.

Dadurch, daß der Schraubbolzen 6 nahe der Oberfläche 14 verläuft und der Schenkel 13 vergleichsweise (gegenüber dem zweiten L-Schenkel 15) stark bemessen ist, verbleibt eine verhältnismäßig breite, relativ zur Achse 12 exzentrische Stirnfläche 4, die sich im Falle einer unter einem Winkel kreuzenden Profilverbindung - wie dies dargestellt ist - über das jeweilige Profil 1 schiebt und dieses gegen den L-Schenkel 15 abstützt. Liegen hingegen die beiden Rohrprofile 1 parallel zueinander, wie dies aus Fig. 3c ersichtlich ist, so bildet jeweils die Außenmantelfläche des einen Rohres die Stützfläche für das andere Rohr. Auf diese Weise kann durch die exzentrische Anordnung die Anbringung einer getrennten Stützfläche vermieden werden, wie sie später vor allem an Hand der Fig. 4 und 5 beschrieben wird.

Gemäß Fig. 2 ist aber die Ausnehmung 11 nicht nur gegen den anderen Schellenteil 3 zu offen, sondern durchbricht auch eine Endfläche 16 am Ende des schmäleren L-Schenkels 15. Das von der Ausnehmung 11 aufzunehmende Rohrprofil 1 ragt dementsprechend über die Endfläche 16 hinaus. Diese Ausbildung erleichtert Montage und Demontage der Rohrprofile 1,1', weil diese bei geöffneter Verbindung 6,7 nur seitlich in die Ausnehmung 11 geschoben werden müssen, worauf der Bolzen 6 zugeschraubt wird.

Der schmälere L-Schenkel 15 besitzt an seinem Ende eine etwas stärker bemessene Breite b als etwa in der Mitte, um so das Rohrprofil 1 zu umgreifen und einen sicheren Halt zu verleihen. Der Innenwinkel der die L-Form ergebenden Ausnehmung 11 kann dabei in der aus Fig. 2 ersichtlichen Weise abgerundet sein, um sich an den Außenumfang des zu klemmenden Rohrprofiles anzuschmiegen. In der Tat wird es sich ja für viele Anwendungsfälle um ein Rohrprofil handeln, das durch eine Verbindungsanordnung 2 mit einem weiteren Körper, insbesondere einem anderen Rohrprofil, zu verbinden ist. Wenn dann der Rundungsradius der Ausnehmung 11 nicht völlig dem Radius des Rohrprofiles entspricht (vgl. z.B. die Fig. 6), so spielt dies an sich keine Rolle. Dennoch ist aber die Erfindung keineswegs auf die Verbindung von Rohr- oder Zylinderprofilen beschränkt, wie später noch, an Hand der Fig. 4 erläutert wird. Jedenfalls sei auch betont, daß die L-förmige Ausbildung der Schellenteile 3 auf Grund einer die Endfläche 16 durchbrechenden Ausnehmung 11 zwar besonders bevorzugt, keineswegs aber zwingend vorzusehen ist, vielmehr kann die Ausnehmung auch entsprechend Fig. 11 ausgebildet sein, wodurch sich ein etwa U-förmiger Schellenteil ergibt.

Es sei ferner darauf hingewiesen, daß die gemäß den Fig. 1 und 2 eben ausgebildete Stirnfläche 4 gegebenenfalls auch andersartig ausgebildet sein kann. Beispielsweise könnte sie derart mit am Umfang verlaufenden Vorsprüngen und Vertiefungen ausgebildet und in der Mitte ausgehöhlt sein, daß die beiden Stirnflächen 4 der Schellenteile 3 beim Eingreifen der Vorsprünge des einen Schellenteiles in die Vertiefung des anderen einen geringeren Abstand voneinander besitzen, als wenn die Vorsprünge aufeinander stehen, wodurch die Verbindungsanordnung an unterschiedliche Profildimensionen angepaßt werden kann. Allerdings ist dann eine Winkelverstellung nur mehr in Stufen

möglich, ähnlich wie es später an Hand der Fig. 7 noch beschrieben wird. Zwar tragen dann auch die Vorsprünge und Vertiefungen dazu bei, in die Oberfläche des zu klemmenden Profiles einzubeißen, doch ist dies nicht immer erwünscht, weil dabei die Profilmantelfläche beschädigt werden könnte. Es ist deshalb bevorzugt, wenn die jeweilige Stützfläche bzw. die Stirnfläche 4 eben ist, weil auch eine Anpassung an verschiedene Profildimensionen mit anderen Mitteln möglich ist.

Aus Fig. 4 ist ersichtlich, daß auch andere Profilformen mit Hilfe einer Verbindungsanordnung 1/2 miteinander verbunden werden können. In der dargestellten Ausführung ist eine Profilstange 101 quadratischen Querschnittes mit einem Sechseckprofil 101' mit Hilfe von Schellenteilen 103,103' unter 90 Grad verbunden. Auch hier sind die beiden Schellenteile 103 gemäß der bevorzugten Ausführungsform L-förmig und identisch ausgebildet, doch unterscheiden sie sich geringfügig von der vorher beschriebenen Variante. So ist die Innenfläche 114 der Ausnehmung geriffelt ausgebildet, um einem kantigen Profil 101 einen besseren Halt zu geben, wogegen eine derartige Riffelung bei der Anwendung auf Zylinderprofile 1 keinen Nachteil bedeudet, zumal ja dennoch die Oberfläche 114 im wesentlichen entlang einer Zylinderfläche verläuft. Soferne ein Profil 101 kleineren Querschnitt aufweist, als der Ausnehmung 111 entspricht, und mit einem anderen verbunden werden soll, kann zwischen die beiden Schellenteile 103 ein Zwischenteil 17 eingelegt sein.

Die Stützfläche 104 ist dann an dem Zwischenteil 17 ausgebildet, der angesichts der Verdrehbarkeit der beiden Schellenteile um die Achse 12 der zugankerartigen Verbindung 6,7 zweckmäßig scheibenförmig, und zwar kreisscheibenförmig ist. Der dargestellte Zwischenteil 17 besitzt, bezogen auf Fig. 4, einen oberen Abschnitt größerer Dicke und einen schmäleren unteren Abschnitt. Dadurch ragt der Zwischenteil 17 mit seinem oberen Abschnitt in die Ausnehmung 111 und gleicht so deren - im Vergleich zur Diagonalabmessung der Stange 101 - zu große Länge parallel zur Achse 12 aus. Würde anderseits in die Ausnehmung 111 ein Profil mit größeren Abmessungen eingelegt, als der Länge des Schenkels 113 entspricht, so braucht das Zwischenstück 17 nur umgedreht werden, wobei sein dickerer oberer Abschnitt nach unten zu liegen kommt. Gegebenenfalls ist es dann zweckmäßig, zwei Bohrungen 108,108' im Zwischenteil 17, und zwar je eine im dünneren bzw. im dickeren Abschnitt, vorzusehen, wobei der dünnere Abschnitt gegebenenfalls auch kürzer ausgebildet sein kann, so daß er nicht die gesamte Stirnfläche 4 des Schellenteiles 103 bedeckt.

Auch die Stützfläche 104 des Zwischenteiles 17 ist geriffelt bzw. rauh, eine Maßnahme, die gewünschtenfalls - trotz an sich ebener Ausbildung - auch an der Stirnfläche 4 der Schellenteile vorgesehen sein kann. Zur zugankerartigen Verbindung 6,7 sei noch bemerkt, daß aus den obigen Erläuterungen bereits deutlich geworden ist, daß sie nicht nur zur Verbindung der beiden Schellenteile dient, sondern auch die Drehachse 12 für die beiden Schellenteile definiert, um verschiedene Winkelstellungen (vgl. Fig. 3) zu ermöglichen. Während also bei bekannten Verbindungen für diesen Zweck mehrere Teile und Verbindungselemente vorgesehen werden mußten, dient hier eine Verbindung 6,7 beiden Zwecken.

Eine andere Ausführungsform zeigt Fig. 5, nach der zwei Rohrprofile 1,201 unterschiedlichen Durchmessers durch völlig gleich ausgebildete Schellenteile 3 in zueinander paralleler Lage miteinander verbunden sind.

Dabei ist ersichtlich, daß die Ausnehmung 11 des Schellenteiles 3' hinsichtlich ihrer Krümmung der Innenfläche nicht mit dem Krümmungsradius des Rohrprofiles 201 übereinstimmt, dies aber die Funktion keineswegs stört, so daß Schellenteile bestimmter Dimension für verschiedene Profil-Querschnittsformen, aber auch für verschiedene Querschnittsdimensionen verwendet werden können.

Während aber das Profil 201 etwas kleiner ist als die Länge L des dickeren L-Schenkels 13 des Schellenteiles 3', ist der Durchmesser des Profiles 1 geringfügig größer. Immerhin ist der Unterschied nicht allzugroß, so daß die Länge L wenigstens ungefähr den Durchmessern der beiden Rohrprofile 1,201 entspricht. Falls sich nun die Durchmesserunterschiede beider Rohrprofile ausgleichen, können sich die beiden Rohre beim Festziehen der zugankerartigen Verbindung 6,7 auch mit ihrer Mantelfläche gegenseitig abstützen. Durch die durch die Ausnehmung 11 gegebene Auskehlung des jeweiligen dünneren L-Schenkels 15 ergibt sich ja in jedem Falle ein fester Halt, der ein Abgleiten der beiden Zylindermantelflächen der Rohrprofile 1,201 voneinander verhindert. Wäre diese Auskehlung nicht vorhanden, müßte entweder auf die Parallellage der beiden Rohre 1,201 verzichtet werden oder ein entsprechendes, beispielsweise auch weiches, Zwischenstück eingelegt werden, wie es später noch beschrieben wird.

Im vorliegenden Falle ist ein scheibenförmiges Zwischenstück 117 vorgesehen, das mit beiden Fläche je eine Stützfläche 204 bildet. Wie schon erwähnt, kann die Stützfläche eine gewisse Rauhigkeit aufweisen, und diese ist hier durch eine sägezahnartige Riffelung gegeben. Da das Rohr 1 einen die Länge L überragenden Durchmesser besitzt, nimmt dann im zusammengespannten Zustand der Schellenteile 3,3' der Zwischenteil 117 eine etwas schräg liegende Stellung ein, wie aus Fig. 5 ersichtlich ist. Falls der scheibenförmige Zwischenteil dünn genug ist, kann er sich unter dem Zug der Verbindung 6,7 auch leicht verbiegen und so den Mantelflächen der Profile 1,201 besser anpassen.

Zur Anpassung der jeweiligen Stützfläche kann diese aber auch mit einem Belag aus nachgiebig elastischem Material versehen sein, wie dies aus Fig. 6 ersichtlich ist. Auch gemäß dieser Fig. sind zwei Rohrprofile 1,1' in zueinander paralleler Lage miteinander verbunden. Ebenso wie im Falle des Rohrprofiles 201 der Fig. 5 ist auch der Krümmungsradius der Innenflächen 14 der Ausnehmung 11 größer als der Radius der Rohrprofile 1,1'; im übrigen sei hier angemerkt, daß es auch kaum eine Rolle spielt, wenn der Radius der Innenflächen 14 kleiner als derjenige der Rohrprofile 1,1' ist, da sich dann das verbreiterte Ende des L-Schenkels 15 krallenartig festbeißt.

Um einerseits die Manteloberfläche der Rohrprofile 1,1' zu schonen, anderseits allfällige Durchmesserunterschiede geringeren Ausmaßes auszugleichen, ist die jeweilige, das Rohrprofil 1 bzw. 1' gegen den L-Schenkel abstützende Stützfläche mit einem Filzbelag 18 (es könnte auch ein Gummi- oder Kunststoffbelag verwendet werden) versehen. Dieser Filzbelag 18 kann als Filzscheibe zwischen die Schellenteile 3,3' eingelegt und mit ihnen zusammen mit Hilfe der zugankerartigen Verbindung 6,7' verspannt sein. Dabei wird in diesem Ausführungsbeispiel eine Flügelmutter 7' verwendet, wogegen zweckmäßig der - hier nur strichliert am anderen Ende angedeutete - Bolzenkopf in seiner Ausnehmung 9 formschlüssig festgelegt ist. Es versteht sich, daß der Filzbelag 18 gewünschtenfalls nur auf der Stützfläche vorgesehen sein kann, zumal er ja zwischen den Stirnflächen 4 der Schellenteile 3,3' kaum eine Funktion erfüllt.

Gegenüber den vorher beschriebenen Ausführungsformen ist im Falle der Fig. 6 auch unterschiedlich, daß hier die Rückenfläche 5 des Schellenteiles 3 die Rolle der Stützfläche spiele. In diesem Falle kann aber der mit ihm zusammengespannte weitere Schellenteil 3' nicht selbst die Stützfläche für das Profil 1 bieten, weshalb ein gesondertes Stück 217 mit den Schellenteilen 3,3' zusammengespannt werden muß. Das Scheibenstück 217 ist völlig eben, kann aber auch vom Zwischenstück 117 der Fig. 5 gebildet sein. Immerhin ist ersichtlich, weshalb eine Ausbildung der Verbindungsanordnung 2 gemäß den Fig. 1 bis 3 bevorzugt ist, bei der die Stützfläche von der jeweiligen Stirnfläche 4 gebildet ist, so daß ein zusätzlicher Teil 217 eingespart werden kann.

Bei der Ausführung nach Fig. 7 wird für die zugankerartige Verbindung eine Torbandschraube 106 verwendet, wie dies einer bevorzugten Ausführung entspricht. Dadurch ist die Verletzungsgefahr für die Mantelfläche des jeweiligen einzuspannenden Profiles geringer, besonders da die Bohrung 8 so nahe der Oberfläche 14 der Ausnehmung 11 angeordnet ist, daß sie diese schlitzförmig teilweise durchbricht, wie an Hand des Schellenteiles 203' zu erkennen ist. Der Kopf 19 der Torbandschraube 106 ist mit einer Öffnung für einen Inbusschlüssel versehen.

Zwischen die Schellenteile 203,203' ist eine Zwischenscheibe 317 eingelegt, die gewünschtenfalls aus flexiblem Material - ebenfalls zur Schonung der Manteloberfläche der Profile - bestehen kann. Diese Zwischenscheibe 317 trägt an ihren einander gegenüberliegenden Stützflächen 304 wenigstens je einen Zahn 20. Die Stirnfläche 304' der beiden Schellenteile 203,203' ist mit - den Dimensionen des Zahnes 20 auf jeder der Flächen 304 entsprechenden - Vertiefungen 21 versehen, die bezüglich der Achse 12 der zugankerartigen Verbindung 7,106 radial verlaufen.

Beim Zusammenspannen der Teile 203,203' und 317 dringen die Zähne der Scheibe 317 an ihrer Ober- und Unterseite in die ihnen zugekehrten Vertiefungen 21 ein und sichern so die jeweilige Winkellage der beiden Schellenteile 203,203'. Zwar ist damit nur mehr eine Verdrehung in Stufen möglich, doch ist ersichtlich, daß die Abstufung der Vertiefung 21 sehr fein sein kann, so daß die Abstufung keinen Nachteil bedeutet. Da bei einem einzigen Zahn 20 die Gefahr gegeben ist, daß er sich bei einer Drehung der Scheibe 317 ungewollt gegenüber der Ausnehmung 11 befindet, ist es vorteilhaft, wenigstens zwei einander um 180 Grad gegenüberliegende Zähne 20 vorzusehen, wie dies aus Fig. 7 ersichtlich ist.

Die Zähne 20 können aus dem Material der Scheibe 317 geformt sein, insbesondere, wenn die Scheibe 317 nicht aus allzu weichem Material besteht, so können aber auch in das Gummi- oder Kunststoffmaterial der Scheibe 317 eingeschweißt, eingespritzt oder sonst in einer geeigneten Form mit ihr verbunden sein und dann vorzugsweise aus härterem Material gebildet sein, insbesondere aus Metall. Auch versteht es sich, daß die Ausbildung mit einem Zahn 20 nicht auf die Verwendung einer Zwischenscheibe 317 beschränkt ist, vielmehr solche Zähne oder wenigstens einer davon auch beispielsweise an der Stirnfläche 304' vorgesehen sein können, um beim unmittelbaren Zusammenspannen der Schellenteile 203,203' in die Vertiefungen 21 des Schellenteiles 203' einzugreifen. Dies würde allerdings eine ungleiche Ausbildung der Schellenteile 203,203) bedingen, weshalb die gezeigte Lösung günstiger ist. Ferner versteht es sich, daß an Stelle nur eines oder zweier Zähne 20 auch ebensoviele vorhanden sein können, wie Vertiefungen 21, wobei der der Ausnehmung 11 gegenüberliegende Anteil davon als Oberflächenrauhigkeit zum besseren Halt des jeweiligen Profiles beizutragen vermag.

Sollen die Profile 1,1' einander in einem gewissen Abstand kreuzen, so ist es ohne weiteres möglich, zwischen die beiden Schellenteile 3,3' einen Zwischenteil 417 größerer axialer Erstreckung (bezüglich der Achse 12 der zugankerartigen Verbindung 7,206) vorzusehen, wie dies der Fig. 8 zu entnehmen ist. Während aber die Zwischenscheibe 317 im besprochenen Beispiel nach Fig. 7 aus weichem Material besteht, wird dies im allgemeinen für das als Abstandhalter wirkende Zwischenstück 417 nicht tunlich sein, obwohl es an sich ebenfalls möglich ist. Kommt es jedoch auf einen genauen Abstand an, so wird das Zwischenstück 417 wohl zweckmäßig aus im wesentlichen ebensolch hartem Material bestehen, wie die Schellenteile 3, d.h. im allgemeinen aus Metall.

Das als Abstandhalter fungierende Zwischenstück 417 nach Fig. 8 ist zweckmäßig etwa zylinderförmig und kann beispielsweise aus einer zylindrischen Stange ausgeschnitten und mit einer der Bohrung 8 entsprechenden Bohrung 208 versehen werden. Die Stirnflächen 404 bilden dann die Stützflächen für die Profile 1.

Eine ähnliche Anordnung zeigt die Fig. 9, wobei die Zwischenscheibe 517 beispielsweise ebenfalls aus flexiblem Material bestehen kann. Ist sie außerdem dünn genug und sind die Vertiefungen 21 entsprechend dimensioniert, kann auch ein Zahn an der Stirnfläche 4 des Schellenteiles 203 vorgesehen sein, der sich in die Scheibe 517 einbohrt und an der gegenüberliegenden Seite eine in eine
Vertiefung 21 dringende Ausstülpung verursacht. Dennoch
ist die Verwendung einer gezahnten Scheibe 317 vorzuziehen.

In Fig. 9 wird mit dem Schellenteil 3 ein wesentlich
größerer Schellenteil 303 zusammengespannt, der auch ein
entsprechend größeres Rohrprofil 301 aufnimmt. Dies ist
ohne Schwierigkeiten möglich, wenn die axiale Länge der
dickeren L-Schenkel 13 bzw. 313 im wesentlichen der in
gleicher Erstreckungsrichtung gemessenen Dimension der
Profile 1,301 entspricht. Kleinere Abweichungen nach oben
oder unten spielen keine Rolle, nicht zuletzt auch auf
Grund der flexiblen Scheibe 517, die eine ausgleichende
Funktion erfüllt, wie der Filz 18 in Fig. 6. Bei einem
leichten Überragen des Rohrdurchmessers analog zu Fig. 5
würde sich nur ein geringer Spalt zwischen den Stirnflächen 304' ergeben.

Mit Hilfe der zugankerartigen Verbindung lassen sich aber
auch andere Körper mit einem Profil 1 verbinden, wie in
Fig. 10 zu sehen ist, z.B. mit Hilfe eines Winkelstückes
22, dessen Rückenfläche 105 gleichzeitig die Stützfläche
bildet, um das Rohrprofil 1 gegen den dünneren L-Schenkel
15 zu pressen. Somit sind für diese Verbindungsart L-
förmige Verbindungselemente 3,22 besonders günstig. Auch
hier ist das mit dem Schellenteil 3 verbundene Winkelstück 22 um die Achse 12 der zugankerartigen Verbindung
mit dem Bolzen 6 schwenkbar, so daß ein Brett 23 wahlweise als Regalbrett angeordnet werden kann, oder in dazu
senkrechter Lage als Wandelement. Selbstverständlich ist
gewünschtenfalls auch jede Zwischenlage möglich.

Falls die Verschwenkbarkeit des Winkelstückes 22 mit der
Erzielung eines entsprechenden Zuges am Bolzen 6 dann in
einem Widerspruch steht, so kann zum Ausgleich eine Gummischeibe od. dgl. (wie vorher beschrieben) als Belag der Stützfläche 105 vorgesehen werden.

Fig. 11 zeigt, daß auch ein Schellenteil 403 mit U-förmigen Ausnehmungen 211 zur Aufnahme eines Rohrprofils 1 mit einem gemäß den übrigen Fig. ausgebildeten Schellenteil 303 (oder auch mit einem ebensolchen Schellenteil 403) zusammengespannt werden kann, um Rohre 1,301 unterschiedlichen Durchmessers (aber auch gleichen Durchmessers) miteinander zu verbinden, wie überhaupt die L-Form zwar die günstigste Form, nicht jedoch die einzige Möglichkeit darstellt. Der Grund, warum ein L-Schellenteil günstiger ist als der Schellenteil 403 ist aus Fig. 11 leicht zu ersehen, denn es muß hier die gesamte Schelle 403 abgeschraubt werden, um das Rohrprofil 1 aus ihr wieder herausnehmen zu können, soferne keine Möglichkeit zum Herausziehen in Axialrichtung des Rohres 1 besteht.

Um dem Rohrprofil 1 eine definierte Lage innerhalb der Ausnehmung 211 auch dann zu geben, wenn dessen Krümmungsradius nicht mit dem der Innenfläche 214 übereinstimmt, kann ein Schrägflächenabschnitt 213' vorgesehen sein. Dieser Schrägflächenabschnitt kann übrigens auch dann vorgesehen werden, wenn der U-Schenkel nicht völlig um das Rohr 1 herumgekrümmt und die Ausnehmung 211 daher auch nach oben zu offen ist, beispielsweise wenn das horizontal verlaufende freie Ende des Schenkels 115 fehlt.

In Fig. 11 ist übrigens auch ersichtlich, daß zwischen den beiden Schellenteilen 303,403 auf Grund des großen Durchmessers des Rohrprofiles 301 ein geringer Spalt auch bei angezogenem Zuganker 6,7 verbleibt, was die Verbindungsfunktion nicht im geringsten beeinträchtigt. An dieser Stelle sei erwähnt, daß an Stelle eines Schraubbolzens 6 auch jede andere Zugverbindung vorgesehen werden kann, falls dies auch konstruktiven Gründen erwünscht ist.

An Hand der Fig. 12 soll gezeigt werden, daß die bisher
beschriebene Verbindungsanordnung keineswegs auf die Verbindung von nur zwei Profilen beschränkt ist, sondern
daß gewünschtenfalls beliebig viele Profile 1 miteinander verbunden werden können, wie es etwa bei Installationen (Heizungsrohre, Wasserrohre usw.) notwendig sein
kann. Hierzu brauchen nur entsprechend viele Schellenteile 3,3',3" durch eine entsprechend lange Schraube 206
(oder auch durch ein Zugseil mit Schraubbolzenstücken an
seinen beiden Enden) miteinander verbunden werden, wodurch Profile 1,1',1" in jeder beliebigen Winkellage
zueinander miteinander verbindbar sind.

Obwohl im Rahmen der Erfindung im allgemeinen die Stirnfläche 4 (oder deren Entsprechungen in den verschiedenen
Ausführungen) als Stützfläche herangezogen wird, soferne
nicht ein Zwischenteil 17 (oder dessen Entsprechungen)
vorgesehen ist, und die Rückenflächen 5 hierfür nicht
bevorzugt sind, zeigt Fig. 6 doch, daß dies grundsätzlich
möglich ist. Es wird daher im Interesse einer universellen Einsetzbarkeit günstig sein, auch die Rückenfläche 5
jeweils als mögliche Stützfläche auszubilden, d.h. im
wesentlichen eben und gegebenenfalls mit rauher, z.B.
körniger, Oberfläche.

Im Rahmen der Erfindung sind zahlreiche Modifikationen
möglich; beispielsweise kann die an Hand der Fig. 7 beschriebene Anordnung von Zahn 20 und Vertiefungen 21
selbstverständlich auch umgekehrt werden, wobei die
Zwischenscheibe 317 die Vertiefung 21, die Stirnfläche
304' hingegen jeweils wenigstens einen Zahn 20 besitzen
und damit auch bei Verwendung der Schellenteile ohne

0195852

Zwischenscheibe eine griffigere Klemmung der Profile 1 ermöglichen kann.

P a t e n t a n s p r ü c h e
--------------------------------

1. Verbindungsanordnung für wenigstens ein längliches Profil mit einem damit zu verbindenden weiteren, relativ zum Profil unter verschiedenen Winkeln anzuordnenden Körper, mit zumindest einem das Profil aufnehmenden Schellenteil, der hierfür eine Ausnehmung aufweist, sowie mit einer Verbindung zum Befestigen des weiteren Körpers, d a d u r c h   g e k e n n z e i c h n e t , daß die Verbindung (6,7) den Schellenteil (3,103,203,403) zugankerartig durchsetzt und die das Profil (1) aufnehmende Ausnehmung (11) zumindest an einer normal zur Achse (12) der zugankerartigen Verbindung (6,7) liegenden Seite offen ist, wobei gegen die offene Seite der Ausnehmung (11) mit Hilfe der zugankerartigen Verbindung (6,7) eine Stützfläche (4; 5; 104; 204; 304; 404; 105) spannbar ist.

Verbindungsanordnung nach Anspruch 1, d a d u r c h   g e k e n n z e i c h n e t , daß der weitere Körper von wenigstens einem mit einer ebenso wenigstens einseitig offenen Ausnehmung (11) versehenen und eine Aufnahme (8) für die zugankerartige Verbindung aufweisenden zweiten Schellenteil (3,3',103',203',303',3") gebildet ist, der vorzugsweise die gleichen Dimensionen wie der erste Schellenteil (3,103,203,403) aufweist.

3. Verbindungsanordnung nach Anspruch 1 oder 2, d a d u r c h   g e k e n n z e i c h n e t , daß die Stützfläche (4;5) am jeweils anderen Schellenteil (3) selbst ausgebildet ist, und senkrecht  zur Achse (12) sowie vorzugsweise in derselben Ebene wie die offene Seite der Ausnehmung (11) verläuft.

- 24 -

4. Verbindungsanordnung nach Anspruch 1 oder 2, d a d u r c h   g e k e n n z e i c h n e t , daß die Stützfläche (104;204;304;404) an einem zwischen beiden Schellenteilen (103,103'; 3,3'; 203,203'; 203,303) angeordneten, insbesondere scheibenförmigen, Zwischenteil (17;117;18;317;417;517) ausgebildet ist.

5. Verbindungsanordnung nach Anspruch 4, d a d u r c h   g e k e n n z e i  c h n e t , daß der Zwischenteil (17) wenigstens zwei Abschnitte unterschiedlicher Dicke aufweist, die mit wenigstens zwei Profilen (1,101) unterschiedlichen Querschnittes zusammenwirken (Fig. 4).

6. Verbindungsanordnung nach Anspruch 4, d a d u r c h  .g e k e n n z e i c h n e t , daß die Stützfläche (404) an einem, insbesondere rohrförmigen, Zwischenteil (417) ausgebildet ist, der als Distanzstück zwischen die Schellenteile (3) einsetzbar ist und vorzugsweise aus etwa ebenso hartem Material  wie die Schellenteile (3) besteht (Fig. 8).

7. Verbindungsanordnung nach einem der vorhergehenden Ansprüche, d a d u r c h   g e k e  n n z e i c h n e t, daß die Ausnehmung (11) auch nach der parallel zur Achse (12) liegenden Seite offen ist, wodurch sich ein etwa L-förmiger Schellenteil (3,103',203',303',3") ergibt, dessen senkrecht zur Achse (12) verlaufender Schenkel (15) an seinem Ende vorzugsweise stärker bemessen ist als in seiner Mitte.

8. Verbindungsanordnung nach einem der vorhergehenden Ansprüche, d a d u r c h   g e k e n n z e i c h .n e t , daß die Stützfläche (104;204;304) und/oder die  Innenfläche der Ausnehmung (11) wenigstens teilweise rauh, beispielsweise geriffelt, gezahnt oder körnig (Fig. 4,5,7) und/oder elastisch nachgiebig (Fig. 6,9) ausgebildet ist.

9. Verbindungsanordnung nach Anspruch 8, d a d u r c h   g e k e n n z e i c h n e t , daß die Stützfläche (304) und die ihr gegenüberliegende Stirnfläche (304') wechselweise wenigstens einen Zahn (20), bzw. wenigstens eine Vertiefung (21) aufweisen (Fig. 7).

10. Verbindungsanordnung nach Anspruch 8, d a d u r c h   g e k e n n z e i c h n e t , daß sowohl die Stützfläche wie auch die ihr gegenüberliegende Stirnfläche Zähne aufweisen, wobei die Zahnkronen beider Flächen zur Ausbildung einer vergrößerten Distanz zwischen den Innenflächen der beiden Ausnehmungen - vorzugsweise mit Hilfe eines Rastsitzes - aufeinanderliegen.

0195852

FIG 1

FIG 2

FIG 3a

FIG 3b

FIG 3c

FIG 3d

R 427

FIG 4

FIG 5

FIG 6

FIG 7

FIG 8

R 427

FIG 9

FIG 10

FIG 11

FIG 12